# EUROPÄISCHE PATENTSCHRIFT

(11) **EP 3 972 770 B1**
(45) Veröffentlichungstag und Bekanntmachung des Hinweises auf die Patenterteilung: **16.08.2023**
(21) Anmeldenummer: 21712005.4
(22) Anmeldetag: 16.02.2021
(51) Int. Cl.: B23K 9/32, B23K 9/028

(54) **HALTERUNGSAUFSATZ, VERWENDUNG UND VERFAHREN ZUR HERSTELLUNG**
RETAINING ATTACHMENT, USE AND METHOD OF PRODUCTION
FIXATION DE RETENUE, UTILISATION ET PROCÉDÉ DE PRODUCTION

(30) Priorität: 13.08.2020 DE 102020004936
(43) Veröffentlichungstag der Anmeldung: 30.03.2022
(73) Patentinhaber: Orbitalservice GmbH, 63872 Heimbuchenthal (DE)
(72) Erfinder: KUNZE, Dirk, 63875 Mespelbrunn (DE)
(74) Vertreter: Nitz, Astrid
(86) Internationale Anmeldenummer: PCT/DE2021/000030
(87) Internationale Veröffentlichungsnummer: WO 2022/033614

(56) Entgegenhaltungen:
- US-A- 5 304 776

## Beschreibung

Die Erfindung betrifft einen Halterungsaufsatz mit einem Anschlussbereich für eine Formiergaszuleitung sowie eine Verwendung davon.

Bekannt ist es, für Formiergaszuleitungen im Schweißverfahren von Rohrleitungen Halterungsaufsätze einzusetzen, die teilweise aufgrund der Vorfertigung nicht vollständig dicht sind oder sehr viele unterschiedliche Größen vorgehalten werden müssen, die dann im speziellen Anwendungsfall selten eine vollständige Sicherheit gegen seitliches Eintreten von Raumluft etc. aufweisen.

US 5 304 776 A offenbart ein automatisches Schweißssystem, wobei komplexe Einrichtungen mit vielen abzudichtenden Elementen vorgesehen sind.

Aufgabe der vorliegenden Erfindung ist es ein sicheres und zuverlässiges Halterungsmittel bereitzustellen, dass die Nachteile des Stands der Technik vermeidet.

Die Aufgabe wird gelöst durch einen Halterungsaufsatz mit einem Anschlussbereich für eine Formiergaszuleitung, umfassend ein erstes zylindrisches Halterungsmittel und ein zweites zylindrisches Halterungsmittel, die aneinander lösbar zu befestigen sind, insbesondere ineinander verschraubbar, wobei das erste Halterungsmittel und/oder das zweite Halterungsmittel derart in einem 3D-Kunststoffdruckverfahren angepasst ausgebildet ist, dass durch eine im Wesentlichen zentrale Durchführung im ersten Halterungsmittel eine zu schweißende, eingesetzte Rohrleitung zu halten ist, mit einem zylindrischen Einsatzbereich für die zu schweißende Rohrleitung in dem zweiten Halterungsmittel, wobei der Einsatzbereich einen Anschlagringbereich und einen Anschlussbereich für eine Gasdurchführungsbohrung zum Zuführen von Formiergas zu einer Gasverwendungsstelle durch eine Formiergaszuleitung in der zu schweißenden Rohrleitung aufweist, wobei die eingesetzte Rohrleitung gegenüber den zylindrischen Halterungsmitteln durch eine oder mehrere flexiblen Dichtungen, insbesondere Dichtungsringen, abgedichtet gehalten ist, die insbesondere angepasst in einem 3D- Kunststoffdruckverfahren hergestellt sind.

Durch die vorliegende Erfindung kann ein genau angepasster, leichter und trotzdem sicher dichtender Halterungsaufsatz auf Rohrleitungen, die unter Formiergasschutz, insbesondere Argon, Stickstoff und deren Mischung mit Wasserstoffstoffkomponenten, geschweißt werden, bereitgestellt werden, der zugleich nachhaltig und materialsparend dünnwandig aufgebaut ist, da er vorteilhaft im Wesentlichen aus einem Kunststoffmaterial aufgebaut sein kann. Die Vorrichtung liefert eine einfache und zugleich sichere Befestigung, insbesondere durch Verschraubung, wobei zugleich die integriert hergestellten Dichtungen fest angezogen werden, um einen Gasaustritt zu verhindern. Vorteilhaft ist dies insbesondere bei einem WIG-Hand- oder WIG-Orbitalschweißverfahren.

Die Erfindung liefert einen zuverlässigen, kompakten Halterungsaufsatz, wobei keine große Anzahl unterschiedlicher Durchmesser in Lagerhaltung notwendig ist, da durch das 3D-Kunststoffdruckverfahren hergestellte Halterungsaufsätze zeitnah und genau an die zu schweißende Rohrleitung angepasst werden können. Vorteilhaft kann die gesamte Vorrichtung, umfassend insbesondere beide Halterungsaufsatzmittel, die Dichtungen und die Verwirbelungsdüsen im 3D-Druckverfahren integriert und genau passend ausgebildet werden, so dass Undichtigkeit vermieden werden. Die beispielhaft mögliche Verwendung einer im 3D- Kunststoffdruckverfahren integrierten Gasverwirbelungsdüse verhindert weiterhin, dass sich im Innenbereich, d.h. in unmittelbarer Nähe einer Schweißnaht, verschiedene Schmutzstoffe, beispielsweise Manganoxyde, an einer Innenwand absetzen. Besonders im Bereich von UHP Anwendungen ist dies vorteilhaft.

Vorteilhaft ist es, wenn die Dichtungen, insbesondere eine erste Dichtung und eine zweite Dichtung, im zweiten zylindrischen Halterungsmittel eingesetzt sind.

Vorteilhaft ist es, wenn die Dichtungen als elastische Hohlringe aufgebaut sind, die angepasst in einem 3D- Kunststoffdruckverfahren hergestellt sind, und die durch das Befestigen, insbesondere Verschrauben der Halterungsmittel aneinander, zu einem dichtenden Kontakt an der Rohrleitung verformbar sind. Die Hohlringe können sich beim Anpressen um mehrere mm verformen und liegen daher optimal angepasst um die Rohrleitung. Hergestellt können die Hohlringe vorteilhaft vollständig in einem 3D-Kunststoffdruckverfahren werden, insbesondere im FDM Verfahren. Insbesondere auch aufgrund der Materialeinheit ist eine nachhaltige Entsorgung verbessert.

Vorteilhaft ist es, wenn Dichtungen, insbesondere elastische Hohlringe, durch ein oder mehrere Zwischenelemente getrennt sind, so dass eine Funktionseinheit gebildet ist, die in das zweite Halterungsmittel einsetzbar ist, wobei beim Befestigen, insbesondere Verschrauben der Halterungsmittel aneinander, die Dichtungen, insbesondere Hohlringe, gegen das oder die Zwischenelemente und gegen die eingesetzte Rohrleitung dichtend zu pressen sind. Die Dichtungsringe sind durch die Zwischenelemente leicht beweglich, so dass sich keine Verzerrungen und nachfolgend Undichtigkeiten beim Festschrauben bilden.

Vorteilhaft ist es, wenn in das zweite Halterungsmittel an der Gasdurchführungbohrung zum Zuführen von Formiergas in die Rohrleitung eine Formiergasdüse in Verlängerung der Formiergaszuleitung angeordnet sind, die insbesondere eine wirbelförmige Umleitung des zuströmenden Formiergases ermöglicht und die angepasst in einem 3D- Kunststoffdruckverfahren anzupassen sind, insbesondere austauschbar, je nach Verwirbelungsbedarf. Die Gasverwirbelungsdüse kann insbesondere an der Innenseite einer Schott-Steck-Nippel-Verschraubung für die Formiergaszuleitung eingesetzt werden. Die Gasverwirbelungsdüse liefert einen Gasstrom, der eng an den Wänden der Rohrleitung verläuft, so dass zuverlässig verhindert wird, dass sich im Innenbereich der Rohrleitung, in unmittelbarer Nähe einer Schweißnaht, verschiedene Manganoxide an der Innenwand der Rohrleitung absetzen. Besonders im Bereich von UHP Anwendungen ist dies nicht gewollt. Beispielhaft können verschiedene Anschlussmöglichkeiten der Formiergaszuleitung, insbesondere auch Steckverbinder vorgesehen sein.

Vorteilhaft ist es, wenn ein Zylinderbreitumfang eines Einsatzendes des ersten Halterungsmittels einer normierten Rohrleitungsdicke entspricht und/oder die Formiergaszuleitung normiert an das zweite Halterungsmittel an ein 3D-gedruckten Gewinde anschraubbar ist.

Vorteilhaft ist es, wenn die Halterungsmittel jeweils einstückig ausgebildet sind, insbesondere zusammen mit den Dichtungen.

Vorteilhaft ist es, wenn das erste Halterungsmittel und/oder ein zweite Halterungsmittel in einem FDM Druckverfahren angepasst ausgebildet ist.

Die Aufgabe wird ebenfalls gelöst durch eine Verwendung einer Vorrichtung nach einem der Ansprüche 1 bis 8, mit einem ersten und zweiten Halterungsmittel zum Aufsetzen auf eine Rohrleitung mit einer Formiergaszuleitung als Schutzgaszuleitung bei einer Warmverarbeitung von Metallen, insbesondere Löten und/oder Schweißen und/oder Walzen und/oder Pressen und/oder Glühen, insbesondere WIG-Hand- und WIG-Orbitalschweißen, wobei die Halterungsmittel und/oder die Dichtungen in einem 3D- Kunststoffdruckverfahren an die Rohrleitung anpassbar ausgebildet sind.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

Es zeigen:
- Fig. 1: eine erfindungsgemäße Vorrichtung in perspektivischer Schnittansicht und
- Fig. 2: eine erfindungsgemäße Vorrichtung in Außenansicht.

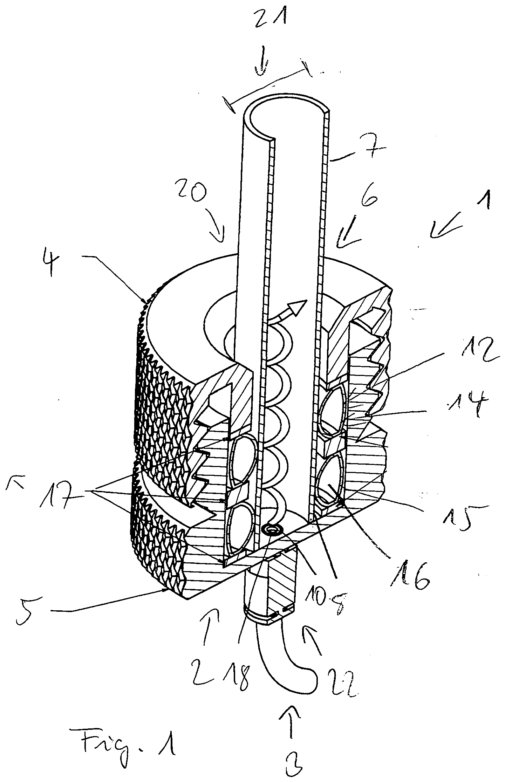

Fig. 1 zeigt eine erfindungsgemäße Vorrichtung in perspektivischer Schnittansicht, wobei ein Halterungsaufsatz 1 mit einem Anschlussbereich 2 für eine Formiergaszuleitung 3 an eine Rohrleitung 7 angeordnet ist, umfassend ein erstes zylindrisches Halterungsmittel 4 und ein zweites zylindrisches Halterungsmittel 5, die aneinander lösbar zu befestigen sind, insbesondere ineinander verschraubbar sind, wobei das erste Halterungsmittel 4 und/oder ein zweite Halterungsmittel 5 derart in einem 3D-Kunststoffdruckverfahren angepasst ausgebildet ist, dass durch eine im Wesentlichen zentrale Durchführung 6 im ersten Halterungsmittel 4 eine zu schweißende, eingesetzte Rohrleitung 7 zu halten ist, mit einem zylindrischen Einsatzbereich 8 für die zu schweißende Rohrleitung 7 in dem zweiten Halterungsmittel 5, wobei der Einsatzbereich 8 einen Anschlagringbereich 9 und einen Anschlussbereich 2 für eine Gasdurchführungsbohrung 10 zum Zuführen von Formiergas zu einer Gasverwendungsstelle durch eine Formiergaszuleitung 3 in der zu schweißenden Rohrleitung 7, wobei die eingesetzte Rohrleitung 7 gegenüber den zylindrischen Halterungsmitteln 4,5 durch eine oder mehrere Dichtungen 12, insbesondere Dichtungsringe 13, abgedichtet ist, die angepasst in einem 3D- Kunststoffdruckverfahren hergestellt sind, wobei die Dichtungen 12, insbesondere eine erste Dichtung 14 und eine zweite Dichtung 15, im ersten 4 und/oder zweiten zylindrischen Halterungsmittel 5 eingesetzt sind.

Dichtungen 12, beispielhaft elastische Hohlringe 16, sind durch mehrere Zwischenelemente 17 getrennt, so dass eine Funktionseinheit gebildet ist, die in das zweite Halterungsmittel 5 einsetzbar ist, wobei beim Befestigen, insbesondere Verschrauben der Halterungsmittel 4,5 aneinander, die Dichtungen, insbesondere Hohlringe 16, gegen das oder die Zwischenelemente 17 und gegen die eingesetzte Rohrleitung dichtend zu pressen sind.

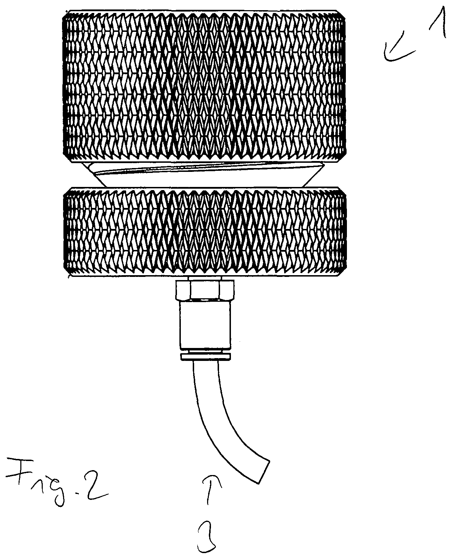

Fig. 2 zeigt eine erfindungsgemäße Vorrichtung in Außenansicht. Es demonstriert insbesondere wie einfach und sicher die Verbindung des Halterungsaufsatzes 1 möglich ist, wobei ein nicht dargestellte Rohrleitung durch eine eingesetzte Dichtungsfunktionseinheit gehalten ist.

### BEZUGSZEICHENLISTE

- 1: Halterungsaufsatz
- 2: Anschlussbereich
- 3: Formiergaszuleitung
- 4: erstes Halterungsmittel
- 5: zweites Halterungsmittel
- 6: Durchführung
- 7: Rohrleitung
- 8: Einsatzbereich
- 9: Anschlagringbereich
- 10: Gasdurchführungsbohrung
- 12: Dichtung
- 13: Dichtungsring
- 14: erste Dichtung
- 15: zweite Dichtung
- 16: Hohlring
- 17: Zwischenelement
- 18: Formiergasdüse
- 20: Einsatzende
- 21: Rohrleitungsdicke
- 22: Gewinde

## Patentansprüche

1. Halterungsaufsatz (1) mit einem Anschlussbereich (2) für eine Formiergaszuleitung (3), **gekennzeichnet durch** ein erstes zylindrisches Halterungsmittel (4) und ein zweites zylindrisches Halterungsmittel (5), die aneinander lösbar zu befestigen sind, insbesondere ineinander verschraubbar, wobei das erste Halterungsmittel (4) und/oder das zweite Halterungsmittel (5) derart in einem 3D-Kunststoffdruckverfahren angepasst ausgebildet ist, dass durch eine im Wesentlichen zentrale Durchführung (6) im ersten Halterungsmittel (4) eine zu schweißende, eingesetzte Rohrleitung (7) zu halten ist, mit einem zylindrischen Einsatzbereich (8) für die zu schweißende Rohrleitung (7) in dem zweiten Halterungsmittel (5), wobei der Einsatzbereich (8) einen Anschlagringbereich (9) und einen Anschlussbereich (2) für eine Gasdurchführungsbohrung (10) zum Zuführen von Formiergas zu einer Gasverwendungsstelle durch eine Formiergaszuleitung (3) in der zu schweißenden Rohrleitung (7) aufweist, wobei die eingesetzte Rohrleitung (7) gegenüber den zylindrischen Halterungsmitteln (4,5) durch eine oder mehrere flexiblen Dichtungen (12), insbesondere Dichtungsringen (13) , abgedichtet gehalten ist, die insbesondere angepasst in einem 3D- Kunststoffdruckverfahren hergestellt sind.

2. Halterungsaufsatz nach Anspruch 1, **dadurch gekennzeichnet, dass** die Dichtungen (12), insbesondere eine erste Dichtung (14) und eine zweite Dichtung (15), im zweiten zylindrischen Halterungsmittel (5) eingesetzt sind.

3. Halterungsaufsatz nach Anspruch 1 oder 2, **dadurch gekennzeichnet, dass** die Dichtungen als elastische Hohlringe (16) aufgebaut sind, die angepasst in einem 3D-Kunststoffdruckverfahren hergestellt sind, und die durch das Befestigen, insbesondere Verschrauben der Halterungsmittel (4,5) aneinander, zu einem dichtenden Kontakt an der Rohrleitung (7) verformbar sind.

4. Halterungsaufsatz nach einem der Ansprüche 1 bis 3, **dadurch gekennzeichnet, dass** Dichtungen (12), insbesondere elastische Hohlringe (16), durch ein oder mehrere Zwischenelemente (17) getrennt sind, so dass eine Funktionseinheit gebildet ist, die in das zweite Halterungsmittel (5) einsetzbar ist, wobei beim Befestigen, insbesondere Verschrauben der Halterungsmittel (4,5) aneinander, die Dichtungen, insbesondere Hohlringe (16), gegen das oder die Zwischenelemente (17) und gegen die eingesetzte Rohrleitung dichtend zu pressen sind.

5. Halterungsaufsatz nach einem der Ansprüche 1 bis 4, **dadurch gekennzeichnet, dass** in das zweite Halterungsmittel (5) an der Gasdurchführungbohrung (10) zum Zuführen von Formiergas in die Rohrleitung (7) eine Formiergasdüse (18) in Verlängerung der Formiergaszuleitung (3) angeordnet sind, die insbesondere eine wirbelförmige Umleitung des zuströmenden Formiergases ermöglicht.

6. Halterungsaufsatz nach einem der Ansprüche 1 bis 5, **dadurch gekennzeichnet, dass** ein Zylinderbreitumfang eines Einsatzendes (20) des ersten Halterungsmittels (4) einer normierten Rohrleitungsdicke (21) entspricht und/oder die Formiergaszuleitung (3) normiert an das zweite Halterungsmittel (5) an ein 3D-gedruckten Gewinde (22) anschraubbar ist.

7. Halterungsaufsatz nach einem der Ansprüche 1 bis 6, **dadurch gekennzeichnet, dass** die Halterungsmittel jeweils einstückig ausgebildet sind, insbesondere zusammen mit den Dichtungen.

8. Halterungsaufsatz nach einem der Ansprüche 1 bis 7, **dadurch gekennzeichnet, dass** das erste Halterungsmittel (4) und/oder ein zweite Halterungsmittel (5) in einem FDM Druckverfahren angepasst ausgebildet ist.

9. Verwendung eines Halterungsaufsatzes nach einem der Ansprüche 1 bis 8, mit einem ersten (4) und zweiten Halterungsmittel (5) zum Aufsetzen auf eine Rohrleitung (7) mit einer Formiergaszuleitung (3) als Schutzgaszuleitung bei einer Warmverarbeitung von Metallen, insbesondere Löten und/oder Schweißen und/oder Walzen und/oder Pressen und/oder Glühen, insbesondere WIG-Hand- und WIG-Orbitalschweißen, wobei die Halterungsmittel und/oder die Dichtungen in einem 3D-Druckverfahren an die Rohrleitung anpassbar ausgebildet sind.

10. Verfahren nach Anspruch 9, wobei der Halterungsaufsatz (1) an eine Rohrleitung angesetzt wird.

## Claims

1. Mounting attachment (1) with a connecting area (2) for a forming gas line (3), **characterised by** a first cylindrical mounting means (4) and a second cylindrical mounting means (5) which can be detachably attached to each other and in particular screwed into each other, the first mounting means (4) and/or the second mounting means (5) being adapted In a 3D plastic printing process in such a way that, by means of an essentially central passage (6) in the first mounting means (4), a weldable insert is inserted in the first mounting means (4). The pipe (7) is to be held, with a cylindrical area of application (8) for the pipe (7) to be welded in the second mounting means (5), the area of application (8) having a stop area (9) and a connection area (2) for a gas passage bore (10) for the supply of forming gas to a gas application point through a forming gas line (3) in the pipe (7) to be welded, whereby the pipe (7) used in relation to the cylindrical mountings (4,5) is provided with one or more flexible seals (12), in particular (13), sealed, which are specially adapted in a 3D-Plastic printing process.

2. A mounting attachment according to claim 1, **characterised In that** the seals (12), in particular a first seal (14) and a second seal (15), are inserted in the second cylindrical mounting means (5).

3. A mounting attachment as claimed in claim 1 or 2, **characterised in that** the seals are constructed as elastic hollow rings (16) adapted by a 3D plastic printing process and deformable by fastening, in particular by screwing, the mounting means (4,5) together to form a sealing contact on the pipe (7).

4. A mounting attachment as claimed in any one of claims 1 to 3, **characterised in that** seals (12), in particular elastic hollow rings (16), are separated by one or more intermediate members (17), so as to form a functional unit which can be used in the second mounting means (5), whereby when fastening, in particular by screwing the mounting means (4,5), the seals, in particular hollow rings (16), are to be pressed sealingly against the intermediate member(s) (17) and against the pipe used.

5. A mounting attachment as claimed in any one of claims 1 to 4, **characterised in that** a forming gas nozzle (18) is arranged in the second mounting means (5) at the gas lead-through bore (10) for supplying forming gas to the pipeline (7) in extension of the forming gas line (3), which in particular enables a vortex diversion of the incoming forming gas.

6. A mounting attachment as claimed in any one of claims 1 to 5, **characterised in that** a cylinder width circumference of an insert end (20) of the first mounting means (4) corresponds to a standard pipe thickness (21) and/or the forming gas line (3) can be screwed to the second mounting means (5) in a standard way to a 3D printed thread (22).

7. A mounting attachment as claimed in any one of claims 1 to 6, **characterised in that** the mounting means are in one piece, in particular together with the gaskets.

8. A mounting attachment according to any one of claims 1 to 7, **characterised in that** the first mounting means (4) and/or a second mounting means (5) are adapted in an FDM printing process.

9. Use of a mounting attachment according to any one of Claims 1 to 8, with first (4) and second mounting means (5) for mounting on a pipe (7) with a forming gas line (3) as a shielding gas line in a hot working of metals, in particular soldering and/or welding and/or rolling and/or pressing and/or annealing, in particular TIG hand and TIC orbital welding, the mounting means and/or seals being adapted to the pipe in a 3D printing process.

10. A method according to claim 9, wherein the mounting attachment (1) is attached to a pipe.

## Revendications

1. Embout de fixation (1) muni d'un espace de raccordement (2) pour une conduite de gaz de formage (3), **caractérisé par** un premier support cylindrique (4) et un second support cylindrique (5), qui doivent être fixés l'un à l'autre de manière dissolvable, en particulier vissables l'un à l'autre, le premier support (4) et/ou le second support (5) étant conçus selon un procédé d'impression 3D en plastique de telle sorte que, grâce à une conception essentiellement centralisée (6) dans le premier support (4), un support à souder, La canalisation (7) doit être maintenue avec une plage d'utilisation cylindrique (8) pour la canalisation à souder (7) dans le second support (5), où la plage d'utilisation (8) comporte une plage d'amortissement (9) et une plage de raccordement (2) pour un forage d'écoulement de gaz (10) pour l'acheminement du gaz moulé vers un point d'utilisation de gaz par une canalisation de gaz moulé (3) dans la canalisation à souder (7), où la canalisation utilisée (7) par rapport aux supports cylindriques (4,5) par un ou plusieurs joints flexibles (12), notamment des joints d'étanchéité flexibles (12). (13), scellé, qui sont fabriqués en particulier sur mesure dans un procédé d'impression plastique 3D.

2. Embout de fixation selon la revendication 1, **caractérisé par** le falt que les joints (12), en particulier un premier joint (14) et un second (15), sont insérés dans le second support cylindrique (5).

3. Embout de fixation selon la revendication 1 ou 2, **caractérisé par le fait que** les joints sont constitués d'anneaux creux élastiques (16), fabriqués selon un procédé d'impression plastique 3D et qui peuvent être déformés par fixation, notamment par vissage des supports (4,5) les uns aux autres, pour former un contact d'étanchéité à la tuyauterie (7).

4. Embout de fixation selon l'une des revendications 1 à 3, **caractérisé par le fait que** les joints (12), notamment les anneaux creux élastiques (16), sont séparés par un ou plusieurs éléments intermédiaires (17), de manière à former une unité fonctionnelle pouvant être insérée dans le second élément de fixation (5). Lors de la fixation, notamment par vissage des éléments de fixation (4,5), les joints, notamment les anneaux creux (16), doivent être serrés de manière étanche contre le ou les éléments intermédiaires (17) et contre la tuyauterie utilisée.

5. Embout de fixation selon l'une des revendications 1 à 4, **caractérisé par** la présence d'une buse de gaz de formage (18) en prolongement de la conduite de gaz (3) dans le second dispositif de fixation (5) au niveau du conduit de gaz de formage (10) pour l'alimentation du gaz de formage dans la tuyauterie (7) et permettant notamment une dérivation tourbillonnante du gaz de formage entrant.

6. Embout de fixation selon l'une des revendications 1 à 5, **caractérisé par le fait qu'**une largeur de cylindre d'une extrémité (20) du premier support (4) correspond à une épaisseur normalisée de tuyauterie (21) et/ou que la conduite de gaz de formage (3) normalisée peut être vissée sur le second support (5) à un filetage imprimé en 3D (22).

7. Embout de fixation selon l'une des revendications 1 à 6, **caractérisé par le fait que** les moyens de fixation sont formés en une seule pièce, en particulier avec les joints.

8. Tête de fixation selon l'une des revendications 1 à 7, **caractérisée par le fait que** le premier support (4) et/ou un second support (5) ont été formés de façon adaptée dans un procédé d'impression FDM.

9. Utilisation d'un embout de fixation selon l'une des revendications 1 à 8, avec un premier (4) et un second embout de fixation (5) pour être fixé à une canalisation (7) avec une canalisation de gaz de formage (3) comme gaine de protection pour le traitement à chaud des métaux, en particulier pour le soudage et/ou le soudage et/ou le laminage et/ou le pressage et/ou le recuit, en particulier le soudage manuel et/ou orbital WIG, les dispositifs de fixation et/ou les joints étant adaptés à la canalisation par un procédé d'impression 3D,

10. Procédé selon la revendication 9, dans lequel l'embout de fixation (1) est fixé à une tuyauterie.
